# EUROPÄISCHE PATENTANMELDUNG

(11) **EP 4 640 399 A1**
(43) Veröffentlichungstag der Anmeldung: **29.10.2025**
(21) Anmeldenummer: 25171838.3
(22) Anmeldetag: 23.04.2025
(51) Int. Cl.: B29C 45/14

(54) **VERFAHREN ZUM HERSTELLEN EINER SANITÄREN UNTERPUTZARMATUR UND SANITÄRE UNTERPUTZARMATUR**

(30) Priorität: 26.04.2024 EP 24172642
(71) Anmelder: Ideal Standard International NV, 1935 Zaventem (BE)
(72) Erfinder: Schick, Wolfgang, 54329 Konz (DE); Becker, Thomas, 54558 Strohn (DE)
(74) Vertreter: Feucker, Max Martin

(57) **Zusammenfassung**

Die vorliegende Erfindung betrifft ein Verfahren zum Herstellen einer sanitären Unterputzarmatur (1), umfassend zumindest die folgenden Schritte:
- Bereitstellen mindestens eines Armaturentragkörpers (2), wobei der mindestens eine Armaturentragkörper (2) zumindest einen ersten Arm (3.1) mit einem ersten Anschluss (4.1) und einen zweiten Arm (3.2) mit einem zweiten Anschluss (4.2) umfasst,
- Einbringen des mindestens einen Armaturentragkörpers (2) in eine Spritzgussvorrichtung,
- Herstellen eines Gehäuses (5) der Unterputzarmatur (1) in der Spritzgussvorrichtung, wobei der erste Arm (3.1) und der zweite Arm (3.2) bereichsweise umspritzt werden und der erste Anschluss (4.1) und der zweite Anschluss (4.2) von außerhalb des Gehäuses (5) zugänglich bleiben.

## Beschreibung

Die vorliegende Erfindung betrifft eine sanitäre Unterputzarmatur und ein Verfahren zum Herstellen einer sanitären Unterputzarmatur.

Die sanitäre Unterputzarmatur umfasst zumindest ein Gehäuse aus Kunststoff und mindestens einen Armaturentragkörper.

Der Armaturentragkörper umfasst zumindest einen ersten Arm mit einem ersten Anschluss und einen zweiten Arm mit einem zweiten Anschluss. Der Armaturentragkörper kann einen dritten Arm mit einem dritten Anschluss und insbesondere auch einen vierten Arm mit einem vierten Anschluss aufweisen, wobei der Armaturentragkörper in diesem Fall im Wesentlichen kreuzförmig ausgebildet ist. Der Armaturentragkörper kann auch weitere Arme mit weiteren Anschlüssen, insbesondere einen fünften Arm mit einem fünften Anschluss aufweisen. In der Regel ist der Armaturentragkörper einteilig aus einem Metall, insbesondere aus Messing, ausgebildet. Es kann aber auch vorgesehen sein, dass der Armaturentragkörper mehrteilig ausgebildet ist, wobei insbesondere jeder Arm oder mehrere Arme gemeinsam einen Teil des Armaturentragkörpers bilden können.

Das Gehäuse aus Kunststoff weist in der Regel einen Boden auf sowie einen umlaufenden Rand, der auf der dem Boden gegenüberliegenden Seite eine Zugangsöffnung ausbildet.

Eine solche sanitäre Unterputzarmatur dient dazu, Sanitärbauteile an wasserführende Anschlussleitungen einer Installationswand anzuschließen. Die Anschlüsse des Armaturentragkörpers sind daher so ausgebildet und angeordnet, dass die wasserführenden Anschlussleitungen des Gebäudes, von außerhalb des Gehäuses an die Anschlüsse angebracht werden können. In den Armen sind Wasserleitungen ausgebildet, die jeweils von dem Anschluss zu einer in dem Armaturentragkörper ausgebildeten Öffnung im Inneren des Gehäuses führen.

Im Inneren des Gehäuses kann im Auslieferungszustand ein Spüleinsatz mit den im Inneren des Gehäuses angeordneten und mit den Wasserleitungen des Armaturentragkörpers verbundenen Öffnungen eingesetzt sein, um zunächst die Dichtigkeit der Verbindungen der Unterputzarmatur mit den wasserführenden Leitungen der Installationswand zu prüfen. Der beispielsweise zunächst mit dem Armaturentragkörper verbundene Spüleinsatz kann sodann von einem Installateur durch die dem Boden abgewandte Zugangsöffnung durch Sanitärbauteile, wie Einhebelmischkartuschen, Thermostatmischkartuschen, Umsteller, Ventile, ersetzt werden. Hierbei kann vorgesehen sein, dass zunächst ein Armaturenblock mit einer oder mehreren Aufnahme(n) für die Sanitärbauteile an die Öffnungen des Armaturentragkörpers angeschlossen wird. In dem Armaturenblock sind entsprechende Wasserleitungen ausgebildet, die die Öffnungen des Armaturentragkörpers mit den Aufnahmen für die Sanitärbauteile verbinden. Eine solche sanitäre Unterputzarmatur kann somit modulartig mit unterschiedlichsten Sanitärbauteilen bestückt werden und für verschiedene Funktionen ausgestattet werden. Der erste und der zweite Anschluss dienen in der Regel dazu eine Kalt- und Heißwasserleitung anzuschließen. An die weiteren Arme werden dann in der Regel abgehende Mischwasserleitungen angeschlossen.

Ein Installateur kann zudem die Einbautiefe der sanitären Unterputzarmatur dadurch an die Installationswand anpassen, dass die umlaufende Wandung entsprechend gekürzt wird. Die Zugangsöffnung wird in der Regel durch einen entsprechenden Deckel verschlossen, wobei Bedienelemente der Sanitärbauteile durch den Deckel für einen Endanwender zugänglich bleiben.

Eine solche sanitäre Unterputzarmatur ist beispielsweise aus EP 2 358 947 B1 bekannt. Um die Verbindung der Anschlüsse des Armaturentragkörpers mit den wasserführenden Leitungen zu erleichtern, ist es vorteilhaft, wenn die Anschlüsse über das Gehäuse der Unterputzarmatur hervorstehen. Dies macht allerdings die Montage der Unterputzarmatur umständlich. So schlägt EP 2 358 947 B1 vor, dass die Durchtrittsöffnungen in der Wandung des Gehäuses in Richtung der Längsachse des Gehäuses ausreichend hoch sind, so dass der Armaturentragkörper in einem gekippten Zustand in das Gehäuse und mit den Armen durch die Durchtrittsöffnungen eingesetzt und anschließend in eine parallel zum Boden ausgerichtete Stellung zurückgeschwenkt werden kann, wobei der Armaturentragkörper anschließend so verschoben werden kann, dass alle Arme mit ihren Anschlüssen außerhalb des Gehäuses angeordnet sind.

Es sind auch Lösungen bekannt, bei denen das Gehäuse zwei- oder mehrteilig ausgebildet ist, wobei der Armaturentragkörper zunächst in später die Durchtrittöffnungen ausbildenden Aussparungen an einem unteren Rand eines die Wandung ausbildenden Gehäuseteils eingesetzt wird und ein den Boden ausbildendes Gehäuseteil mit dem die Wandung ausbildenden Gehäuseteil verbunden wird.

Alle diese Lösungen machen es aber erforderlich, dass im Bereich der Durchtrittsöffnungen Dichtungen angeordnet werden müssen, die die Arme des Armaturentragkörpers gegenüber dem Gehäuse abdichten und die Arme in einer gewünschten Stellung halten. Somit ist aber der Montageaufwand einer entsprechenden sanitären Unterputzarmatur relativ groß.

Aufgabe der vorliegenden Erfindung ist es daher, die mit Bezug zum Stand der Technik geschilderten Probleme zumindest teilweise zu lösen und insbesondere eine sanitäre Unterputzarmatur sowie ein Verfahren zur Herstellung einer sanitären Unterputzarmatur anzugeben, mit denen der Montageaufwand zur Herstellung einer sanitären Unterputzarmatur verringert wird.

Eine mögliche Lösung für diese Aufgabe wird mit dem Verfahren zum Herstellen einer sanitären Unterputzarmatur gemäß Anspruch 1 sowie mit der sanitären Unterputzarmatur gemäß Anspruch 4 angegeben. Weitere mögliche Lösungen sowie vorteilhafte Weiterbildungen sind in der vorstehenden und nachfolgenden Beschreibung sowie in den Unteransprüchen angegeben, wobei einzelne Merkmale der vorteilhaften Weiterbildungen in technisch sinnvoller Weise miteinander kombinierbar sind.

Gelöst wird die Aufgabe insbesondere durch ein Verfahren zum Herstellen einer sanitären Unterputzarmatur, welches zumindest die folgenden Schritte umfasst:
- Bereitstellen mindestens eines Armaturentragkörpers, wobei der mindestens eine Armaturentragkörper zumindest einen ersten Arm mit einem ersten Anschluss und einen zweiten Arm mit einem zweiten Anschluss umfasst,
- Einbringen des mindestens einen Armaturentragkörpers in eine Spritzgussvorrichtung und
- Herstellen eines Gehäuses der Unterputzarmatur in der Spritzgussvorrichtung, wobei der erste Arm und der zweite Arm bereichsweise umspritzt werden und der erste Anschluss und der zweite Anschluss von außerhalb des Gehäuses zugänglich bleiben.

Die Aufgabe wird insbesondere auch durch eine sanitäre Unterputzarmatur gelöst, welche ein Gehäuse aus Kunststoff und mindestens einen Armaturentragkörper umfasst, wobei der mindestens eine Armaturentragkörper zumindest einen ersten Arm mit einem ersten Anschluss und einen zweiten Arm mit einem zweiten Anschluss umfasst, wobei das Gehäuse den ersten Arm und den zweiten Arm bereichsweise umgibt und der erste Anschluss und der zweite Anschluss von außerhalb des Gehäuses zugänglich sind, wobei das Gehäuse unmittelbar an den Armen anliegt.

Mit anderen Worten: Die Erfindung sieht in ihrem Grundgedanken vor, dass das Gehäuse oder Teile des Gehäuses nicht zunächst separat hergestellt werden und die Unterputzarmatur anschließend durch Zusammenbau der mehreren Bauteile montiert wird, sondern dass der, gegebenenfalls aus mehreren Bauteilen bestehende, Armaturentragkörper in die Spritzgussmaschine eingesetzt wird und das Gehäuse zumindest teilweise an den Armaturentragkörper angespritzt wird. Somit entfällt zum einen, dass der Armaturentragkörper in einem separaten Montageschritt in das Gehäuse eingesetzt werden muss. Zum anderen kann auf das Anbringen einer separaten Dichtung zwischen Armaturentragkörper und Gehäuse verzichtet werden, da der das Gehäuse ausbildende Kunststoff abdichtend an den Armaturentragkörper angespritzt werden kann. Das Gehäuse liegt also in Umfangsrichtung um jeweils einen Arm unmittelbar an dem Armaturentragkörper an.

In einer Ausführungsform kann hierbei vorgesehen sein, dass die in jedem Arm des Armaturentragkörpers vorgesehene Wasserleitung zum Verbinden des Anschlusses mit einer Öffnung im Inneren des Gehäuses bereits vor dem Einbringen des mindestens einen Armaturentragkörpers in die Spritzgussvorrichtung ausgebildet wird.

Alternativ kann aber auch vorgesehen sein, dass die Wasserleitungen durch entsprechende Bohrungen erst nach dem Spritzgussvorgang in dem mindestens einen Armaturentragkörper ausgebildet wird.

Insbesondere wenn die Wasserleitungen vor dem Einbringen des mindestens einen Armaturentragkörpers in die Spritzgussvorrichtung ausgebildet werden, können Funktionsflächen zur direkten Verbindung an die wasserführenden Anschlussleitungen des Gebäudes und/oder Verbindungselemente, wie Gewinde, Gewindeeinsätze oder Elemente zur Ausbildung einer Press- oder Steckverbindung, an den Armen des mindestens einen Armaturentragkörpers angeordnet beziehungsweise ausgebildet werden. Das Gewinde kann beispielsweise in den Anschluss im Bereich der Wasserleitung eingeschnitten werden. Alternativ können beispielsweise aus Kunststoff bestehende Gewindeeinsätze in entsprechende Bohrungen auch am Anschluss des Armes eingesetzt werden.

Alternativ kann vorgesehen sein, dass die Verbindungselemente erst nach dem Herstellen des Gehäuses in den Armen angeordnet beziehungsweise ausgebildet werden.

Der Anschluss ist also insbesondere das Ende eines Armes, an dem eine wasserführende Leitung der Installationswand angeschlossen wird.

Das in der Spritzgussvorrichtung hergestellte Gehäuse kann beispielsweise eine Wandung der Unterputzarmatur sein, die nach dem Spritzgussprozess noch mit weiteren Komponenten verbunden wird. Die Anschlüsse des mindestens einen Armaturentragkörpers würden in diesem Fall über die Wandung hinausstehen und von der Wandung umgeben.

Bevorzugt ist jedoch, dass das in der Spritzgussvorrichtung hergestellte Gehäuse sowohl einen Boden als auch eine einteilig mit dem Boden ausgebildete umlaufende Wandung umfasst. Der durch die mehreren Arme ausgebildete Armaturentragkörper ist insbesondere parallel zu dem Boden ausgerichtet, wobei die Anschlüsse seitlich über die Wandung herausstehen, so dass die Arme die Wandung durchgreifen. Die Anschlüsse stehen somit insbesondere auch seitlich über den Boden hervor.

Zur Stabilisierung kann der Boden an den mindestens einen Armaturenkörper zumindest teilweise angeformt sein. Der Boden liegt somit unmittelbar an einer Unterseite des Armaturentragkörpers an. Insbesondere liegt der Boden an der gesamten innerhalb des Gehäuses angeordneten Unterseite des Armaturentragkörpers an. Beim Herstellen des Gehäuses wird also der Boden unmittelbar an die Unterseite des Armaturentragkörpers angespritzt.

In diesem Zusammenhang kann auch vorgesehen sein, dass zur sicheren unverschiebbaren Ausrichtung des Armaturentragkörpers in dem Gehäuse innerhalb der Wandung von dem Boden vorstehende Stützstrukturen ausgebildet sind, die seitlich an dem Armaturenkörper anliegen. Die Stützstrukturen des Gehäuses können beispielsweise durch dünne Wände ausgebildet sein, die unmittelbar an einer Seite des Armaturentragkörpers anliegen. Bevorzugt wird der gesamte Armaturentragkörper seitlich von Stützstrukturen innerhalb der äußeren Wandung begrenzt, so dass der Armaturentragkörper in einer Ebene parallel zum Boden nicht innerhalb des Gehäuses bewegt werden kann.

Das Gehäuse wird aus einem Kunststoff hergestellt. Der ausgehärtete und das Gehäuse ausbildende Kunststoff ist insbesondere fest und kompakt und verleiht dem Gehäuse somit eine hohe Stabilität bei geringer Wandstärke, hat aber nur geringe geräuschdämpfende und wärmeisolierende Eigenschaften. Insbesondere enthält der das Gehäuse ausbildende Kunststoff keine Lufteinschlüsse und bildet keinen Schaum aus. Der ausgehärtete und das Gehäuse ausbildende Kunststoff weist bevorzugt eine Dichte von mindestens 600 mg/cm³, besonders bevorzugt von mindestens 800 mg/cm³. Der ausgehärtete und das Gehäuse ausbildende Kunststoff weist bevorzugt eine Dichte zwischen 850 mg/cm und 1150 mg/cm³. Der ausgehärtete und das Gehäuse ausbildende Kunststoff ist vollständig wasserundurchlässig. Der Kunststoff ist insbesondere ein Thermoplast. Der Kunststoff ist bevorzugt Polypropylen (PP). Der Kunststoff kann aber auch Polyethylen (PE), Polybutylenadipat-terephthalat (PBAT), Polybutylensuccinat (PBS), Acrylnitril-Butadien-Styrol-Copolymer (ABS) oder Polybutylenterephthalat (PBT) sein.

Die Erfindung sowie das technische Umfeld werden im Folgenden anhand der Figuren beispielhaft erläutert. Es zeigen schematisch
- Figur 1:: eine Perspektivansicht einer sanitären Unterputzarmatur,
- Figur 2:: eine Schnittdarstellung durch die sanitäre Unterputzarmatur und
- Figur 3:: ein Armaturentragkörper der Unterputzarmatur in Perspektivansicht.

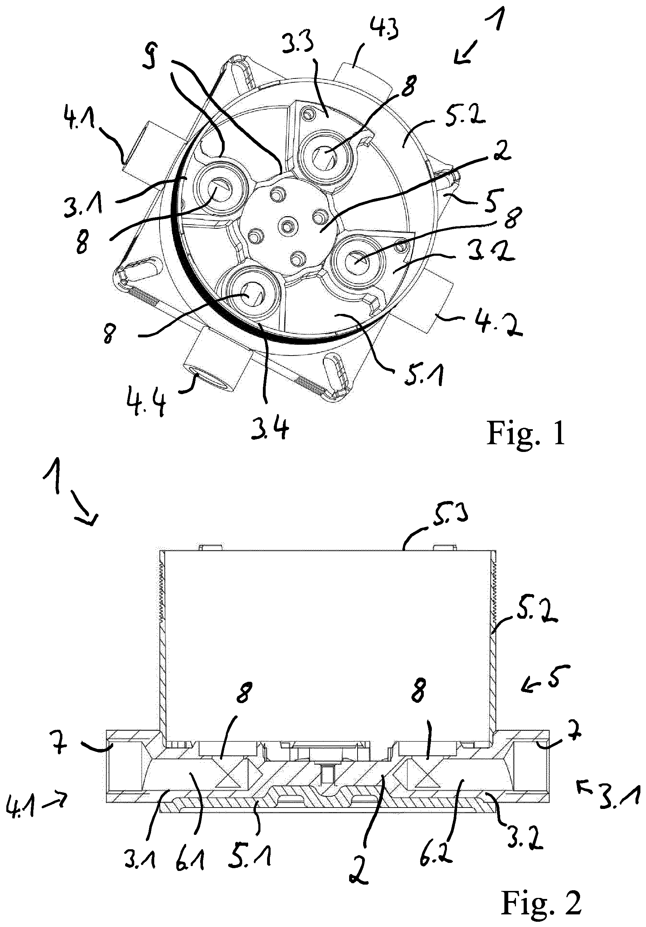

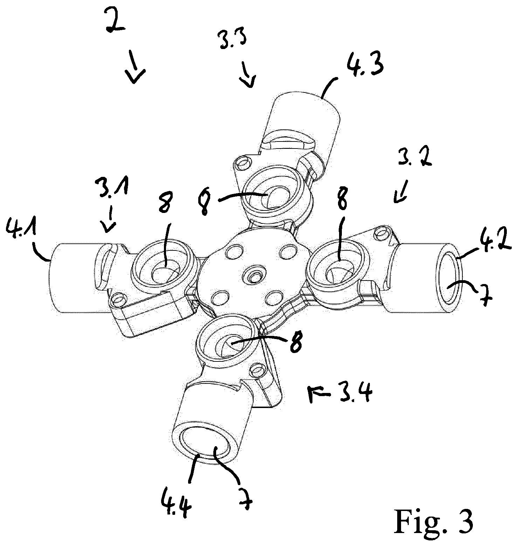

Die in den Figuren 1 und 2 dargestellte sanitäre Unterputzarmatur 1 umfasst einen auch in der Figur 3 gezeigten Armaturentragkörper 2 sowie ein Gehäuse 5.

Der in Figur 3 dargestellte Armaturentragkörper 2 umfasst einen ersten Arm 3.1 mit einem ersten Anschluss 4.1, einen zweiten Arm 3.2 mit einem zweiten Anschluss 4.2, einen dritten Arm 3.3 mit einem dritten Anschluss 4.3 sowie einen vierten Arm 3.4 mit einem vierten Anschluss 4.4. In den Armen 3.1, 3.2, 3.3 und 3.4 ist jeweils eine Öffnung 8 ausgebildet, die durch eine in dem jeweiligen Arm ausgebildete Wasserleitung 6.1 und 6.2 (siehe auch Figur 2) mit dem dazugehörigen Anschluss 4.1, 4.2, 4.3 bzw. 4.4 verbunden ist. An den Anschlüssen 4.1, 4.2, 4.3 und 4.4 ist jeweils ein Gewinde 7 ausgebildet, mittels welchem der Armaturentragkörper 2 mit wasserführenden Leitungen einer Installationswand verbunden werden kann.

Wie insbesondere aus der Schnittdarstellung der Figur 2 hervorgeht, umfasst das Gehäuse 5 einen Boden 5.1, eine umlaufende Wandung 5.2, welche eine Zugangsöffnung 5.3 begrenzt, die auf der dem Boden 5.1 gegenüberliegenden Seite des Gehäuses ausgebildet ist.

Es wird nun vorgeschlagen, dass eine solche sanitäre Unterputzarmatur 1 hergestellt wird, indem der Armaturentragkörper 2 in eine Spritzgussvorrichtung eingebracht wird, und das Gehäuse 5 um den Armaturentragkörper 2 herum durch Spritzgießen eines Kunststoffs hergestellt wird. Dies hat den Vorteil, dass das Gehäuse 5 unmittelbar in Anlage mit dem Armaturentragkörper 2 gebracht werden kann und insbesondere die Arme 3.1, 3.2, 3.3 und 3.4 während des Spritzgussvorgangs jeweils in ihrer Umfangsrichtung vollständig von dem Gehäuse 5 umgeben werden können, wobei das Gehäuse 5 unmittelbar in Anlage mit dem Armaturentragkörper 2 gebracht wird. Hierdurch kann auf Dichtungen zwischen dem Armaturentragkörper 2 und der Wandung 5.2 verzichtet werden.

Zudem kann der Boden 5.1, wie insbesondere aus der Figur 2 ersichtlich, unmittelbar an die Form des Armaturentragkörpers 2 angeformt werden.

Zudem können noch während des Spritzvorganges Stützstrukturen 9 (siehe insbesondere Figur 1) hergestellt werden, die seitlich an dem Armaturentragkörper 2 anliegen und so eine Bewegung des Armaturentragkörpers parallel zur Ebene des Bodens 5.1 zuverlässig unterbinden.

Es kann vorgesehen sein, dass die Wasserleitungen 6.1 und 6.2 sowie die Gewinde 7 vor dem Einsetzen des Armaturentragkörpers 2 in die Spritzgussvorrichtung hergestellt werden. Alternativ kann aber auch vorgesehen sein, dass die Wasserleitungen 6.1 und 6.2, die Gewinde 7 sowie die Öffnungen 8 erst nach dem Herstellen des Gehäuses 5 und Herausnehmen der Unterputzarmatur 1 aus der Spritzgussvorrichtung ausgebildet werden.

### Bezugszeichenliste

- 1: Unterputzarmatur
- 2: Armaturentragkörper
- 3.1: erster Arm
- 3.2: zweiter Arm
- 3.3: dritter Arm
- 3.4: vierter Arm
- 4.1: erster Anschluss
- 4.2: zweiter Anschluss
- 4.3: dritter Anschluss
- 4.4: vierter Anschluss
- 5: Gehäuse
- 5.1: Boden
- 5.2: Wandung
- 5.3: Zugangsöffnung
- 6.1: erste Wasserleitung
- 6.2: zweite Wasserleitung
- 7: Gewinde
- 8: Öffnung
- 9: Stützstruktur

## Patentansprüche

1. Verfahren zum Herstellen einer sanitären Unterputzarmatur (1), umfassend zumindest die folgenden Schritte:
- Bereitstellen mindestens eines Armaturentragkörpers (2), wobei der mindestens eine Armaturentragkörper (2) zumindest einen ersten Arm (3.1) mit einem ersten Anschluss (4.1) und einen zweiten Arm (3.2) mit einem zweiten Anschluss (4.2) umfasst,
- Einbringen des mindestens einen Armaturentragkörpers (2) in eine Spritzgussvorrichtung,
- Herstellen eines Gehäuses (5) der Unterputzarmatur (1) in der Spritzgussvorrichtung, wobei der erste Arm (3.1) und der zweite Arm (3.2) bereichsweise zumindest teilweise umspritzt werden und der erste Anschluss (4.1) und der zweite Anschluss (4.2) von außerhalb des Gehäuses (5) zugänglich bleiben.

2. Verfahren nach Anspruch 1, wobei mindestens eine Wasserleitung (6.1, 6.2) in dem mindestens einen Armaturentragkörper (2) vor dem Einbringen des mindestens einen Armaturentragkörpers (2) in die Spritzgussvorrichtung oder nach dem Herstellen des Gehäuses (5) ausgebildet wird.

3. Verfahren nach Anspruch 1 oder 2, wobei Verbindungselemente, wie Gewinde (7) oder Gewindeeinsätze, an den Armen des mindestens einen Armaturentragkörpers (2) vor dem Einbringen des mindestens einen Armaturentragkörpers (2) in die Spritzgussvorrichtung oder nach dem Herstellen des Gehäuses (5) angeordnet oder ausgebildet werden.

4. Sanitäre Unterputzarmatur umfassend zumindest
- ein Gehäuse (5) aus Kunststoff und
- mindestens einen Armaturentragkörper (2), wobei der mindestens eine Armaturentragkörper (2) zumindest einen ersten Arm (3.1) mit einem ersten Anschluss (4.1) und einen zweiten Arm (3.2) mit einem zweiten Anschluss (4.2) umfasst, wobei das Gehäuse (5) den ersten Arm (3.1) und den zweiten Arm (3.2) bereichsweise umgibt und der erste Anschluss (4.1) und der zweite Anschluss (4.2) von außerhalb des Gehäuses (5) zugänglich sind,
**dadurch gekennzeichnet, dass**
das Gehäuse (5) unmittelbar an den Armen (3.1, 3.2) anliegt.

5. Unterputzarmatur nach Anspruch 4, wobei das Gehäuse (5) einen Boden (5.1) und eine umlaufende Wandung (5.2) aufweist, wobei die Arme (3.1, 3.2) die Wandung (5.2) durchgreifen.

6. Unterputzarmatur nach Anspruch 5, wobei der Boden (5.1) an den mindestens einen Armaturentragkörper (2) angeformt ist.

7. Unterputzarmatur nach einem der Ansprüche 5 oder 6, wobei innerhalb der Wandung (5.2) von dem Boden (5.1) vorstehende Stützstrukturen (9) an dem Armaturentragkörper (2) anliegen.

8. Unterputzarmatur nach einem der Ansprüche 4 bis 7, wobei der Armaturentragkörper (2) einen dritten Arm (3.3) mit einem dritten Anschluss (4.3) und bevorzugt einen vierten Arm (3.4) mit einem vierten Anschluss (4.4) aufweist.

9. Unterputzarmatur nach Anspruch 8, wobei der Armaturentragkörper einen fünften Arm mit einem fünften Anschluss aufweist.

10. Unterputzarmatur nach Anspruch 8 oder 9, wobei der Armaturentragkörper (2) kreuzförmig ausgebildet ist.

11. Unterputzarmatur nach einem der vorhergehenden Ansprüche 4 bis 10, wobei der mindestens eine Armaturentragkörper (2) Öffnungen (8) zum Anbringen von zumindest einem Sanitärbauteil aufweist.

12. Unterputzarmatur nach Anspruch 11, wobei die Öffnungen (8) eine dem Boden (5.1) des Gehäuses (5) gegenüberliegenden Zugangsöffnung (5.3) zugewandt sind.

13. Unterputzarmatur nach Anspruch 11 oder 12, wobei sich durch jeden Arm (3.1, 3.2) jeweils eine Wasserleitung (6.1, 6.2) von der dem Arm (3.1, 3.2) zugeordneten Öffnung (8) zu dem dem Arm (3.1, 3.2) zugeordneten Anschluss (4.1, 4.2) erstreckt.
